# EUROPEAN PATENT SPECIFICATION

(11) **EP 0 547 849 B1**
(45) Date of publication and mention of the grant of the patent: **16.08.1995**
(21) Application number: 92311356.7
(22) Date of filing: 11.12.1992
(51) Int. Cl.: B60C 15/06

(54) **Motor-cycle radial tyre**
Radialer Reifen für Motorräder
Bandage pneumatique radial pour moto

(30) Priority: 14.12.1991 GB 9126583
(43) Date of publication of application: 23.06.1993
(73) Proprietor: SUMITOMO RUBBER INDUSTRIES LIMITED, Chuo-ku Kobe-shi Hyogo 651 (JP)
(72) Inventor: Watkins, David Robert, Sutton Coldfield, West Midlands B74 3EG (GB); Flint, Raymond, Sutton Coldfield, West Midlands B76 8EB (GB)
(74) Representative: Stewart, Charles Geoffrey

(56) References cited:
- EP-A- 0 313 500
- US-A- 4 100 955
- PATENT ABSTRACTS OF JAPAN vol. 14, no. 110 (M-943)28 February 1990 & JP-A-13 11 901 (SUMITOMO RUBBER INDUSTRIES LTD.) 15 December 1989
- PATENT ABSTRACTS OF JAPAN vol. 9, no. 297 (M-432)(2020) 25 November 1985 & JP-A-60 135 312 (SUMITOMO GOMU KOGYO K.K.) 18 July 1985

## Description

This invention relates to radial motor-cycle tyres and in particular but not exclusively to high performance or race motor-cycle tyres.

Such tyres utilise very wide treads which in transverse cross-section are sharply curved to provide good contact-with the road surface when the motor-cycle is steeply banked in cornering. Maintenance of a consistent ground contact area or 'tyre footprint' under all conditions is a major problem in determining general vehicle handling especially maximum cornering speeds under race conditions and this is particularly the case with the radial tyre construction.

Another problem with the radial construction is concerned with power transmission due to the so-called "wind-up" effect in which the sidewalls are deformed in the direction of the applied torque of modern high-powered machines.

Present radial motor-cycle race tyres have short sidewalls which extend to the tread edges radially and axially outwardly from the tyre beads. The beads provide engagement to the wheelrim on tapered bead seats. The sidewalls are reinforced by radial carcass plies which when tensioned by the inflation pressure act together with sidewall geometry to provide location of the curved tread regions to withstand cornering forces.

A tire according to the preamble of claim 1 is known from JP-A-1 311 901.

An object of the present invention is to improve the properties of such tyres.

According to one aspect of the present invention a radial motor-cycle tyre comprises a tread reinforced between its edges by a breaker assembly and having in its normally inflated fitted condition a camber value C/L of between 0.5 and 0.7, a reinforcing carcass ply of radially disposed cords extending under the breaker assembly and between two bead regions and wrapped in each bead region around an annular bead core from the axial inside to the outside to form carcass ply turn-ups and between the tread edges and bead regions tyre sidewalls wherein each sidewall includes a sidewall reinforcing ply comprising cross-woven cords and having first and second edges the first edge being the edge of the axially inner main part of the sidwall reinforcing ply and the second edge being the edge of the axially outer turned up part, the sidewall reinforcing ply being immediately adjacent to and axially outward of the carcass ply and being wrapped around the bead core from the axial inside to the outside so that the second edge is positioned radially outside the edge of the carcass ply turn-up.

By camber value is meant the ratio C/L between the radial distance C from the centre to the edge of the tyre tread and the axial distance L between the centre and edge of the tread.

Preferably the sidewall reinforcing ply comprises square-woven cords such that the cords in the first direction lie at 90 degrees to the cords in the second direction and they are at an angle of 45 degrees to the direction of the radial carcass ply cords. The cords are preferably of a polyamide material.

It is also preferable that the first edge of the sidewall reinforcing ply is radially outside the second edge of the sidewall reinforcing ply and most preferably that they are separated radially by 10mm.

Further aspects of the present invention will become apparent from the description of the following embodiment in conjunction with the attached diagrammatic drawing in which:-

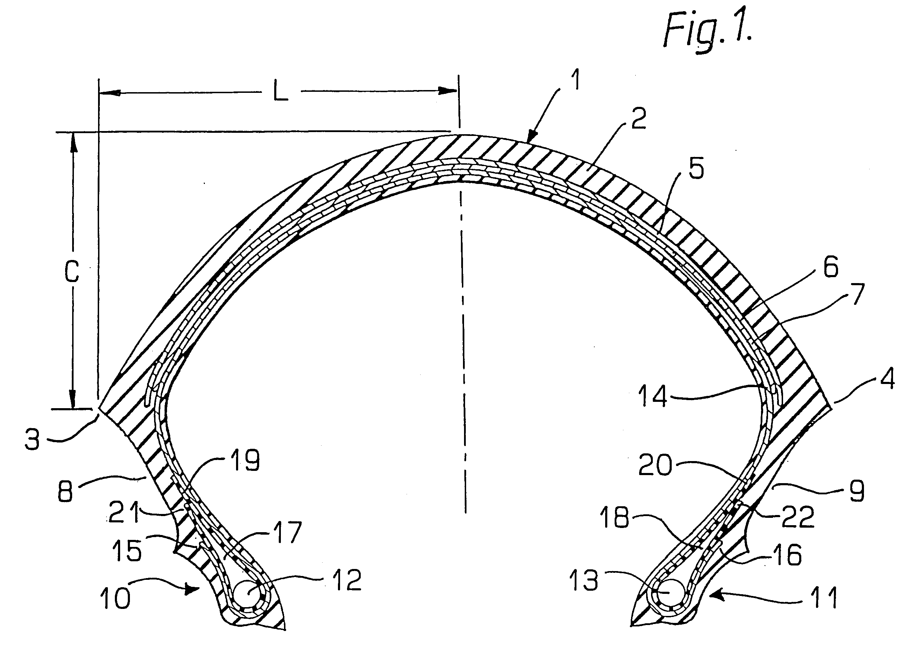

Figure 1 shows in cross-section a 185/55 R17 radial motor-cycle tyre intended for high speed racing.

The tyre 1 has a camber value of 0.6 and comprises a convex tread region 2, having tread edges 3,4, reinforced by a breaker assembly 5. The breaker assembly 5 comprises two breaker plies 6 and 7 each of which comprises weftless Kevlar (Registered Trade Mark) cord tyre fabric.

The tyre 1 further comprises a pair of sidewalls 8 and 9 terminating in bead regions 10 and 11. Each bead region is reinforced by an inextensible annular bead core 12 and 13. Extending between each bead region is a tyre carcass reinforcement ply 14 which is anchored in each bead region by being turned around the respective bead core 12,13 laterally from the inside to the outside to form a carcass ply turn-up 15,16. The carcass reinforcement ply 14 comprises a single ply of nylon tyre fabric laid with the cords substantially radially. Each bead region 10,11 further comprises a hard rubber apex member 17,18 which is anchored to each respective bead core 12,13 and extends taperingly radially outwardly.

The tyre 1 also comprises in each sidewall region a sidewall reinforcing ply 19,20 comprising a single ply of nylon tyre fabric comprising parallel cords in a first direction woven with parallel cords in a second direction being 90° to the first direction. In this embodiment the sidewall reinforcing plies 19,20 are oriented such that the woven cords in both the first and second directions are inclined at an angle of about 45° to the radial direction of the carcass ply 14.

The sidewall reinforcing plies 19,20 are disposed radially outside and adjacent to the carcass ply 14 and are similarly turned around the respective bead cores 12,13 from the inside to the outside to form sidewall reinforcing ply turn-ups 21,22. The sidewall reinforcing ply 19,20 having first and second edges, the first edge being the edge of the axially inner main part of the sidewall reinforcing ply and the second edge being the edge of the axially outer turned up part 21,22. The second edge of the sidewall reinforcing ply is radially higher than the respective edge of the carcass ply turn-up but is 10mm lower than the first edge of the sidewall reinforcing ply.

The resultant tyre has been found to have improved stability under all conditions, better power transmission characteristics and improved grip. This construction has also been shown to give superior fatigue life.

With regard to the cross-woven ply the angles of the cords may be varied. Thus in the ply itself the angle between the cords in the first and second directions may be varied whilst in the tyre the angle of the cross-woven cords in relation to the radial carcass ply cords may also be varied.

## Claims

1. A radial motor-cycle tyre (1) comprising a tread (2) reinforced between its edges (3,4) by a breaker assembly (5) and having in its normally inflated fitted condition a camber value C/L of between 0.5 and 0.7, a reinforcing carcass ply (14) of radially disposed cords extending under the breaker assembly (5) and between two bead regions (10,11) and wrapped in each bead region around an annular bead core (12,13) from the axial inside to the outside to form carcass ply turn-ups (15,16) and between the tread edges (3,4) and bead regions (10,11), tyre sidewalls (8,9) characterised in that each sidewall (8,9) includes a sidewall reinforcing ply (19,20) comprising cross-woven cords and having first and second edges the first edge being the edge of the axially inner main part of the sidewall reinforcing ply (19,20) and the second edge being the edge of the axially outer turned up part (21,22), the sidewall reinforcing ply (19,20) being immediately adjacent to and axially outward of the carcass ply (14) and being wrapped around the bead core (12,13) from the axial inside to the outside so that the second edge is positioned radially outside the edge of the carcass ply turn-up.

2. A radial motor-cycle tyre according to claim 1 characterised in that the first edge of the sidewall reinforcing ply (19,20) is radially outside the second edge of the sidewall reinforcing ply.

3. A motor-cycle tyre according to claim 2 characterised in that the first edge of the sidewall reinforcing ply (19,20) is radially outside the second edge of the sidewall reinforcing ply by 10mm.

4. A radial motor-cycle tyre according to any of claims 1 to 3 characterised in that the sidewall reinforcing ply (19,20) comprises square-woven cords such that the cords in the first direction lie at 90 degrees to the cords in the second direction.

5. A radial motor-cycle tyre according to claim 4 characterised in that the cords comprising the square-woven sidewall reinforcing ply (19,20) are at an angle of 45 degrees to the direction of the radial carcass ply cords.

6. A radial motor-cycle tyre according to any of claims 1 to 5 characterised in that the sidewall reinforcing ply (19,20) comprises polyamide cords.

## Patentansprüche

1. Ein radialer Motorradreifen (1) mit einer Lauffläche (2), die zwischen ihren Kanten (3, 4) durch eine Breakeranordnung (5) verstärkt ist und in ihrem normal aufgepumpten, angebrachten Zustand einen Sturzwert C/L von zwischen 0,5 und 0,7 aufweist, einer verstärkenden Karkassenlage (14) aus radial angeordneten Korden, die sich unter der Breakeranordnung (5) und zwischen zwei Wulstregionen (10, 11) erstrecken sowie in jeder Wulstregion um einen ringförmigen Wulstkern (12, 13) von der axialen Innenseite zu der Außenseite gewickelt sind, um Karkassenlagenumschläge (15, 16) zu bilden, und zwischen den Laufflächenkanten (3, 4) und Wulstregionen (10, 11) Reifenseitenwände (8, 9)
dadurch **gekennzeichnet,**
daß jede Seitenwand (8, 9) eine Seitenwandverstärkungslage (19, 20) umfaßt, die kreuzgewobene Korde umfaßt und erste und zweite Kanten aufweist, wobei die erste Kante die Kante des axial inneren Hauptteils der Seitenwandverstärkungslage (19, 20) und die zweite Kante die Kante des axial äußeren umgeschlagenen Teils (21, 22) ist, sich die Seitenwandverstärkungslage (19, 20) unmittelbar benachbart und axial außerhalb der Karkassenlage (14) befindet und um den Wulstkern (12, 13) herum von der axialen Innenseite zu der Außenseite gewickelt ist, so daß die zweite Kante radial außerhalb der Kante des Karkassenlagenumschlags positioniert ist.

2. Ein radialer Motorradreifen nach Anspruch 1,
dadurch **gekennzeichnet,**
daß die erste Kante der Seitenwandverstärkungslage (19, 20) sich radial außerhalb der zweiten Kante der Seitenwandverstärkungslage befindet.

3. Ein Motorradreifen nach Anspruch 2,
dadurch **gekennzeichnet,**
daß sich die erste Kante der Seitenwandverstärkungslage (19, 20) 10 mm radial außerhalb der zweiten Kante der Seitenwandverstärkungslage befindet.

4. Ein radialer Motorradreifen nach einem der Ansprüche 1 bis 3,
dadurch **gekennzeichnet,**
daß die Seitenwandverstärkungslage (19, 20) viereckig gewobene Korde umfaßt, so daß die Korde in der ersten Richtung unter 90 Grad zu den Korden in der zweiten Richtung liegen.

5. Ein radialer Motorradreifen nach Anspruch 4,
dadurch **gekennzeichnet,**
daß die Korde, die die viereckig gewobene Seitenwandverstärkungslage (19, 20) bilden, unter einem Winkel von 45 Grad zu der Richtung der radialen Karkassenlagenkorde liegen.

6. Ein radialer Motorradreifen nach einem der Ansprüche 1 bis 5,
dadurch **gekennzeichnet,**
daß die Seitenwandverstärkungslage (19, 20) Polyamidkorde umfaßt.

## Revendications

1. Pneumatique (1) à carcasse radiale pour motocyclette, comprenant une bande de roulement (2) armée entre ses bords (3, 4) par un ensemble (5) à nappe sommet et ayant, à son état monté et gonflé normalement, une valeur de cambrure C/L comprise entre 0,5 et 0,7, une nappe (14) d'armature de carcasse formée de câblés disposés radialement étant placée sous l'ensemble (5) à nappe sommet et entre deux régions de talon (10, 11) et s'enroulant, dans chaque région de talon, autour d'une tringle annulaire (12, 13) de la partie interne à la partie externe radialement pour la formation de parties repliées de nappe de carcasse (15, 16) et des flancs (8, 9) du pneumatique placés entre les bords (3, 4) de la bande de roulement et les régions de talon (10, 11), caractérisé en ce que chaque flanc (8, 9) comporte une nappe d'armature de flanc (19, 20) comprenant des câblés à tissage croisé et ayant un premier et un second bord, le premier bord étant le bord de la partie principale axialement interne de la nappe d'armature de flanc (19, 20) et le second bord étant le bord de la partie repliée axialement externe (21, 22), la nappe d'armature de flanc (19, 20) étant immédiatement adjacente à la nappe de carcasse (14) et placée axialement à l'extérieur de cette nappe et s'enroulant autour de la tringle (12, 13) de la partie interne à la partie externe en direction axiale, si bien que le second bord est placé radialement à l'extérieur du bord de la partie repliée de nappe de carcasse.

2. Pneumatique à carcasse radiale pour motocyclette selon la revendication 1, caractérisé en ce que le premier bord de la nappe d'armature (19, 20) de flanc est placé radialement à l'extérieur du second bord de la nappe d'armature de flanc.

3. Pneumatique pour motocyclette selon la revendication 2, caractérisé en ce que le premier bord de la nappe d'armature (19, 20) de flanc est placé radialement à l'extérieur du second bord de la nappe d'armature de flanc d'une distance de 10 mm.

4. Pneumatique à carcasse radiale pour motocyclette selon l'une quelconque des revendications 1 à 3, caractérisé en ce que la nappe d'armature (19, 20) de flanc comprend des câblés tissés en directions perpendiculaires afin que les câblés de la première direction forment un angle de 90° avec les câblés de la seconde direction.

5. Pneumatique à carcasse radiale pour motocyclette selon la revendication 4, caractérisé en ce que les câblés formant la nappe d'armature de flanc (19, 20) tissés perpendiculairement forment un angle de 45° avec la direction des câblés de nappe de carcasse radiale.

6. Pneumatique à carcasse radiale pour motocyclette selon l'une quelconque des revendications 1 à 5, caractérisé en ce que la nappe d'armature (19, 20) de flanc est formée de câblés de polyamide.
